Europäisches Patentamt

European Patent Office

Office européen des brevets

(11) Veröffentlichungsnummer: **0 296 516 B1**

## (12) EUROPÄISCHE PATENTSCHRIFT

(45) Veröffentlichungstag der Patentschrift: **21.04.93**

(21) Anmeldenummer: **88109764.6**

(22) Anmeldetag: **18.06.88**

(51) Int. Cl.⁵: **G06K 9/68**, G06K 9/62

(54) Verfahren zur Erkennung von Zeichen und Objekten.

(30) Priorität: **20.06.87 DE 3720489**

(43) Veröffentlichungstag der Anmeldung:
**28.12.88 Patentblatt 88/52**

(45) Bekanntmachung des Hinweises auf die
Patenterteilung:
**21.04.93 Patentblatt 93/16**

(84) Benannte Vertragsstaaten:
**AT BE CH DE ES FR GB GR IT LI LU NL SE**

(56) Entgegenhaltungen:
**EP-A- 0 206 713**
**EP-A- 0 209 252**
**DE-A- 1 911 269**
**DE-A- 2 445 138**
**DE-A- 3 633 743**

(73) Patentinhaber: **Sood, Ralf A.**
**Alte Aue 37**
**W-3016 Seelze 2(DE)**

(72) Erfinder: **Sood, Ralf A.**
**Alte Aue 37**
**W-3016 Seelze 2(DE)**

(74) Vertreter: **König, Norbert, Dipl.-Phys. Dr. et al**
**Patentanwälte Leine & König Burckhardt-**
**strasse 1**
**W-3000 Hannover 1 (DE)**

EP 0 296 516 B1

**Beschreibung**

Die Erfindung betrifft ein Verfahren zur Erkennung von Zeichen und/oder Objekten.

Es sind eine Reihe von Verfahren und Einrichtungen zum Lesen von Textvorlagen bekannt. Ein optischer Abtaster (Scanner) tastet die Vorlage zeilenweise ab und löst die Vorlage in Bildpunkte auf, die in Pixel aufgelöst an Halbleiterbausteine übermittelt werden. In den Halbleiterbausteinen werden die gelesenen, in Punktrasterbilder aufgelösten Zeichen mit Referenzzeichen verglichen, wobei zur Feststellung des Übereinstimmungsgrades Vergleichs- und Klassifikationsalgorythmen verwendet werden. Es gibt eine ganze Reihe von Störfaktoren, die die Zeichenerkennung negativ beeinflussen: So kann beispielsweise bedrucktes Papier in seiner Stärke und Reinheit Abweichungen aufweisen. Dann kommt es durch Fasern und Verunreinigungen zu Zeichenverformungen in Form von Auswüchsen und Rissen. Dünnes Papier läßt während des Abtastvorganges rückwärtigen Aufdruck als Störungen an oder um die zu lesenden Zeichen hindurchscheinen. Bei mechanischem Druck, z.B. Bleisatz, kommen Verformungen der Zeichen vor. Jede mechanische Beschädigung des Druckstempels findet sich in Form von Rissen und Beulen wieder. Dies führt zu einer großen Formenvielfalt der zu identifizierenden Zeichen. Weiterhin ist die Viskosität der Drucktinte von Einfluß. Dünne Tinte führt zu Verläufen, während dicke Tinte rauhe Außenkanten und Löcher verursacht. Auch die eingesetzten Abtastsysteme können Ursache für Fehler sein. Abtastsysteme mit geringerer Kontrastvielfalt ergeben einen scharfen Kontrastsprung, und dies führt zu groben Zeichenausprägungen. Das gleiche gilt bei geringerer Abtastauflösung. Des weiteren kann sporadisch während des Abtastvorganges ein Aussetzen oder Hinzufügen von Punkten auftreten. Rückwärtige Aufdrucke können zu Zeichenveränderungen führen. Schließlich kann auch die Lage des Zeichens bei Drehung oder Schieflage zu Störungen in der Punktabbildung des Rasters führen.

Aus der DE-A 19 11 269 ist ein Verfahren zur maschinellen Erkennung bestimmter Zeichen bekannt, bei dem die Zeichen in sie charakterisierende Formelemente zerlegt werden und bei dem die abgetasteten und elektrisch gespeicherten Formelemente durch diesen nachgebildete elektrische Sonden ermittelt werden, indem die Formelemente nacheinander den Sonden angeboten werden und mittels einer ersten Extremwertschaltung die dem jeweiligen Formelement ähnlichste Sonde festgestellt wird. Die so festgestellte Sonde wird unter Berücksichtigung ihrer Lage innerhalb des Zeichenfeldes dem betreffenden Zeichen zugeordnet, indem je Zeichen die Anzahl der ihm zugeordneten Sonden festgehalten und mittels einer zweiten Extremwertschaltung das Zeichen mit der größten Anzahl von zugeordneten Formelementen festgestellt und damit erkannt wird. Das Zeichenfeld wird in Zonen eingeteilt. Die Reihenfolge der Formelemente innerhalb einer Zone wird nicht berücksichtigt. Zur besseren Unterscheidung eines Zeichens von anderen ähnlichen Zeichen wird gleichzeitig mit der Zuordnung der Sonde zu den Zeichen eine zusätzliche Unterscheidung in einer gegenüber mindestens einem anderen ähnlichen Zeichen charakteristischen gleichen Zone vorgenommen. Das Ergebnis der zusätzlichen Unterscheidung wird bis zum Ende des Erkennungsvorganges gespeichert. Die Erkennungssicherheit des Zeichens, dessen Formelement in der festgelegten Zone bei der zusätzlichen Unterscheidung untersucht wurde, erhöht oder erniedrigt diejenige der anderen Zeichen. Zur Speicherung der festgestellten Sonden ist für jedes Zeichen ein Binärzähler vorgesehen.

Die Aufgabe der vorliegenden Erfindung besteht darin, ein Verfahren zum Erkennen von Zeichen und/oder Objekten anzugeben, das mit höherer Genauigkeit arbeitet und beliebige Zeichen und Objekte - auch von minderer Druck- oder Wiedergabequalität - und von durch äußere Einflüsse veränderte Zeichen und Objekte, verarbeiten kann.

Diese Aufgabe wird durch das Verfahren gemäß Anspruch 1 gelöst.

Das erfindungsgemäße Verfahren sieht den Aufbau wenigstens einer binären Referenzrasterbild-Ebene vor, die in Referenzspeichern abgelegt sind. Die erste binäre Ebene enthält Referenzrasterbilder von Soll-Zeichen oder Soll-Objekten, während die Speicher für die zweite und die weiteren binären Ebenen Referenzrasterbilder aufweisen, die hinsichtlich charakteristischer Teile der Zeichen oder Objekte besonders gewichtet sind. Ein opto-elektronisch gelesenes, zu identifizierendes Ist-Zeichen oder Ist-Objekt wird zunächst digitalisiert und in binärer Form in einem Speicher abgespeichert und dann zunächst mit den gespeicherten bekannten Soll-Zeichen oder Soll-Objekten der ersten Vergleichsebene verglichen. Ergibt kein Vergleich einen vorbestimmten, zur Identifizierung ausreichenden Übereinstimmungsgrad, so wird für das mit dem Ist-Zeichen oder Ist-Objekt die größte Übereinstimmung zeigende Soll-Zeichen oder Soll-Objekt und das nächstbeste Zeichen oder Objekt ein Vergleich in der zweiten binären Vergleichsebene hinsichtlich des dieser Ebene zugeordneten charakteristischen Teiles des Soll-Zeichens oder Soll-Objektes durchgeführt. Der ermittelte Korrelationswert wird mit dem ersten Vergleichsergebnis (Korrelationswert) kombiniert. Sollte der Übereinstimmungsgrad noch nicht ausreichen zur Identifizierung, folgen weitere Vergleiche in den weiteren binären Vergleichsebenen bis zur Identifizierung des Ist-Zeichens oder Ist-

2

EP 0 296 516 B1

Objektes. Durch diese zusätzlich zu der Ähnlichkeitsbewertung des Gesamtzeichens vorgenommene Ähnlichkeitsbewertung hinsichtlich charakteristischer Teile ist es möglich, auch beliebig gestaltete Zeichen, insbesondere nicht normierte Zeichen, mit hoher Genauigkeit zu erkennen.

Vorteilhafte und zweckmäßige Weiterbildungen der erfindugnsgemäßen Aufgabenlösungen sind in den Unteransprüchen gekennzeichnet.

Die Zeichen- oder Objekterkennung kann noch sicherer gemacht werden, wenn ein vorgebbbarer Distanzwert zum nächstbesten und/oder zweitbesten Referenzzeichen oder Referenzobjekt überschritten wird, wie dies im Anspruch 4 angegeben ist.

Um unnötige Vergleichsoperationen zu vermeiden, wird der Vergleich mit den Referenzrasterbildern beendet, wenn ein vorgebbarer Übereinstimmungsgrad erreicht wird, durch den das betreffende Ist-Zeichen oder Ist-Objekt erkannt ist, gemäß Anspruch 8. Hierdurch kann die Bearbeitungszeit minimiert werden.

Um die Bearbeitungszeit weiter zu minimieren und insbesondere die Gefahr von Verwechslungen zu minimieren, wird gemäß Anspruch 9 vor dem Prüfen des Übereinstimmungsgrades die Höhe und Breite des gelesenen und binär abgebildeten Zeichens oder Objektes bestimmt und mit der Höhe und Breite der binären Referenzrasterbilder verglichen, wobei die Prüfung nur mit den Referenzrasterbildern erfolgt, für die das Vergleichsergebnis in einen vorgebbaren Toleranzbereich fällt.

Eine weitere Minimierung der Verwechslungsgefahr ist erreichbar, wenn, wie im Anspruch 10 angegeben, jeweils die kleinste durch die Breite und Höhe bestimmte Fläche der miteinander verglichenen Ist-Zeichen und Soll-Zeichen (bzw. Ist-Objekte bzw. Soll-Objekte) die Bewertungsfläche gemäß Anspruch 2 bestimmt.

Um bei der Zeichenerkennung, beispielsweise bei gekernten Schriftarten, bei denen Unterschneidungen der Zeichen auftreten (beispielsweise auch bei Verwendung von Schrägbuchstaben) die einzelnen Zeichen sicher segmentieren bzw. isolieren zu können, damit nicht irrtümlich ein weiteres Zeichen gleichzeitig mit abgetastet wird, ist die Weiterbildung gemäß Anspruch 11 vorgesehen. Hierbei ist es weiterhin vorteilhaft, wenn, wie im Anspruch 12 angegeben, das gelesene und binär abgebildete Zeichen oder Objekt nach dem Kopiervorgang gelöscht wird.

Um die Abtastung der Außenkontur schnell und eindeutig durchführen zu können, erfolgt die Abtastung gemäß Anspruch 13 von einem Außenkonturpixel aus nur in einer Richtung, entweder rechtsdrehend oder linksdrehend.

Die mit Hilfe des erfindungsgemäßen Verfahrens erkannten Zeichen werden zur Weiterverarbeitung in Zeichenkodierungen umgewandelt, beispielsweise ASCII, EBCDIC u. a.

Die Erfindung soll nachfolgend anhand der beigefügten Zeichnungen näher erläutert werden.

Es zeigen:

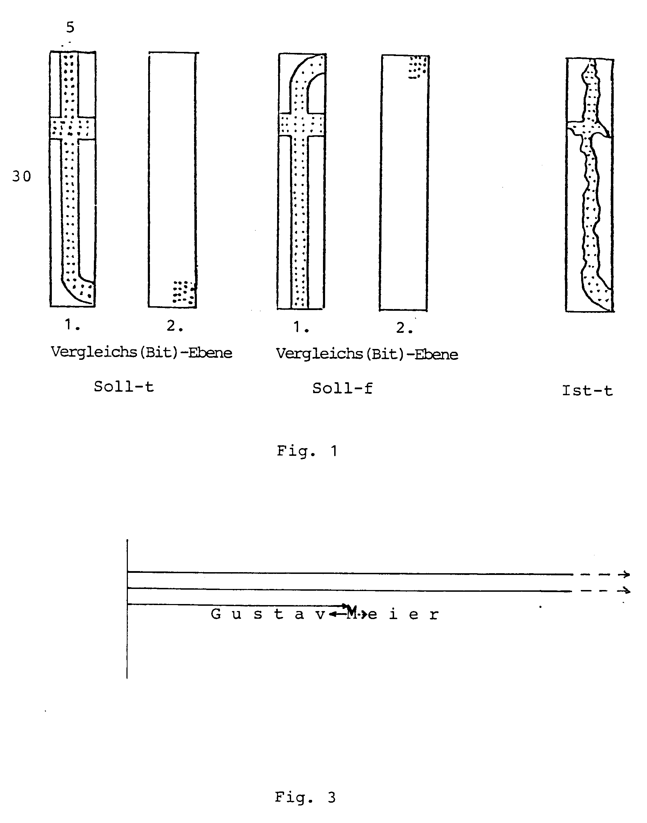

Fig. 1     schematisch die Darstellung eines zu erkennenden Ist-Zeichens und von zwei dem Ist-Zeichen nächstkommenden Referenzzeichen für den Vergleich in einer ersten und einer zweiten Ebene,

Fig. 2     schematisch die Segmentierung eines gelesenen und binär abgebildeten Ist-Zeichens und

Fig. 3     eine schematische Darstellung des Abtastvorlaufs` beim zeilenweisen Abtasten bis zur ersten Berührung mit einem Zeichen.

Es sei angenommen, daß gemäß Zeichnung ein unbekanntes Ist-t erkannt werden soll. Der Soll-/Ist-Vergleich zwischen dem unbekannten Ist-t und den gespeicherten Soll-Zeichen habe in der ersten Vergleichsebene gleiche Übereinstimmungsgrade bezüglich des Soll-t und Soll-f. Soll-t und Soll-f sind ebenfalls in der beigefügten Zeichnung dargestellt. Außerdem sind in der Zeichnung jeweils ein binäres Referenzbild eines charakteristischen Zeichenteiles von t und f, nämlich der Fuß des t und der Kopf des f, für eine zweite Vergleichsebene dargestellt.

Die Bewertungsflächen der Soll-Zeichen sei mit 150 Punkten bzw. Pixel angenommen (Höhe = 30 Pixel, Breite = 5 Pixel). Die Bewertungsfläche der charakteristischen Zeichenteile, die hier mit Gewichtungsfläche bezeichnet wird, soll hier etwa 10 % der Bewertungsfläche des Soll-Zeichens betragen und hat damit den Wert 15 (15 Pixel).

Der Übereinstimmungsgrad bzw. der Schwellwert zur Identifizierung des Zeichens sei 85 %, was einer Abweichung von 15 % entspricht. Außerdem ist zur Identifizierung ein Distanzwert vorgesehen, der 50 % der Abweichung, also 7,5 %, betragen soll.

Es sei nun angenommen, daß der in der ersten binären Vergleichsebene durchgeführte Vergleich des Ist-t mit den Soll-Zeichen keinen ausreichenden Übereinstimmungsgrad zur Identifizierung ergeben hat, d. h. daß der Schwellwert von 85 % nicht überschritten worden ist. Ferner sei angenommen, daß die Bewertung des zweitbesten Soll-Zeichens, vorliegend das Zeichen f, den gleichen Kreuzkorrelationswert wie für das Soll-t ergeben hat, beispielsweise seien 127 übereinstimmende Pixel gezählt worden, so daß sich der Korrelationswert zu 127/150 = 84,6 % ergibt. Da der Vergleich in der ersten binären Vergleichsebene

3

EP 0 296 516 B1

bzw. Bit-Ebene nicht zur Identifizierung des Ist-Zeichens t geführt hat, wird nunmehr der Übereinstimmungsgrad in der zweiten binären Vergleichsebene für die Soll-Zeichen t und f durchgeführt. Es sei angenommen, daß die Untersuchung zeigt, daß für das Soll-t 14 von möglichen 15 Pixel mit dem Ist-t übereinstimmen und für das Soll-f nur 1 Punkt von maximal 15 Pixel.

Dieses Vergleichsergebnis liefert dann folgende Kreuzkorrelationswerte:

```
Für t:
127 (erste Ebene) + 14 (zweite Ebene)
─────────────────────────────────────── =
150 (Bewertungsfläche) + 15 (Gewichtungsfläche)
141
─── = 85,45 %
165
```

```
Für f:
127 (erste Ebene) + 1 (zweite Ebene)
─────────────────────────────────────── =
150 (Bewertungsfläche) + 15 (Gewichtungsfläche)
128
─── = 77,58 %.
165
```

Durch diesen zweiten Vergleichsvorgang in der zweiten Vergleichs-Ebene oder zweiten Bit-Ebene wird also der oben definierte Schwellwert für t überschritten, so daß damit das zu identifizierende Zeichen richtig als "t" erkannt worden ist.

Der Distanzwert ergibt sich laut obiger Definition als Differenz zwischen den beiden Kreuzkorrelationswerten. Er beträgt 7,87 %. Damit ist das erkannte "t" auch ausreichend stark vom Soll-f differenziert, d. h. der Distanzwert zum zweitbesten Ergebnis "f" wird eingehalten.

Hierdurch sind alle Bedingungen für die volle Identifizierung erfüllt.

Vielfach werden sogenannte gekernte Schriftarten oder auch Schriften mit Schrägbuchstaben verwendet, bei denen Unterschneidungen der Zeichen auftreten, so daß die Gefahr besteht, daß beispielsweise zwei Zeichen nicht getrennt erkannt werden können. Ferner können neben den Zeichen Flecken oder dgl. vorhanden sein, die mitgelesen werden und das Erkennen des eigentlichen Zeichens erschweren.

Um in solchen Fällen ein einwandfreies Erkennen der Einzelzeichen in einer Folge von Zeichen, beispielsweise einem Wort, zu ermöglichen, werden die gelesenen und binär abgebildeten Zeichen zunächst aus dem Gesamtrasterbild segmentiert (isoliert), also sozusagen vereinzelt.

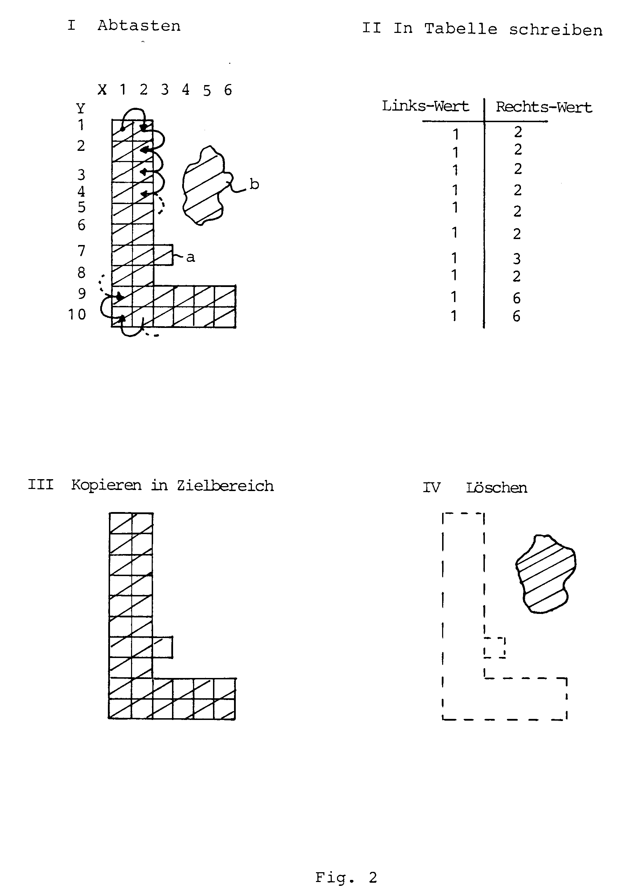

Dieser Segmentierungsvorgang ist in der Fig. 2 schematisch dargestellt worden. Er umfaßt grundsätzlich drei Verfahrensschritte:

I: Pixelweises Abtasten der Außenkontur des gelesenen und binär abgebildeten Ist-Zeichens (hier ein L mit Störstelle a und einem Fleck b) zum Ermitteln der Außenkontur,

II: Einschreiben des Tastergebnisses in eine Tabelle und

III: Kopieren des Ist-Zeichens in einen Zielbereich entsprechend den Werten der Tabelle.

Zusätzlich kann das gelesene und binär abgebildete Zeichen in einem vierten Schritt IV nach dem Kopiervorgang noch gelöscht werden.

Die Ermittlung der Außenkontur erfolgt aufeinanderfolgend durch Abtasten der bis zu 8 Nachbarpixel jedes Außenkonturpixels. Hierbei wird zwar die Störstelle a, nicht jedoch der Fleck b mit erfaßt.

In die Tabelle werden über die Höhe (Y-Achse) der Zeichen, die vorliegend in zehn Zeilen unterteilt ist, die Links- und Rechtswerte der X-Achse (Breite der Zeichen) eingetragen, wobei der Rechtswert die Länge des jeweiligen Zeilenbalkens angibt und der Linkswert den linksseitigen Beginn dieses Zeilenbalkens.

Durch das Segmentieren wird also erreicht, daß Einzelzeichen aus einem Zeichenverband isoliert werden können und Flecken, beispielsweise Tintenspritzer, eliminiert werden und den Zeichenerkennungsvorgang nicht negativ beeinflussen können.

Beim Abtasten des binären Abbildes erfolgt beim zeilenweisen Abtasten ein Abtastvorlauf bis zur ersten Berührung mit einem Zeichen. Dies ist in der Fig. 3 schematisch dargestellt. Die Abtastung erfolgt auf der gesamten Breite der X-Achse, bis eine Berührung mit dem am höchsten aufragenden Zeichen oder Objekt stattfindet, vgl. die Abtastpfeile oberhalb der Angabe "Gustav Meier". Dieses Zeichen wird dann der Bearbeitung zugeführt. Nach erfolgter Erkennung werden die links und/oder rechts von dem ersten erkannten Zeichen oder Objekt befindlichen Zeichen oder Objekte bearbeitet.

4

**Patentansprüche**

1. Verfahren zur Erkennung von Zeichen und/oder Objekten, bei dem die Zeichen und Objekte opto-elektronisch gelesen und die Lesesignale digitalisiert werden zur Erzeugung eines binären ein- oder zwei-dimensionalen Abbildes der Zeichen und/oder Objekte, das mit in Referenzspeichern abgespeicherten binären Referenzrasterbildern von bekannten Soll-Zeichen und/oder Soll-Objekten verglichen wird, wobei

   die abgespeicherten binären Referenzrasterbilder eine erste binäre Vergleichsebene darstellen,

   weitere binäre Vergleichsebenen vorgesehen sind, die durch gespeicherte Referenzrasterbilder gebildet werden, die durch binäres Abbilden nur von charakteristischen Teilen der bekannten Zeichen und/oder bekannten Objekte erzeugt werden,

   die Soll-Zeichen und/oder Soll-Objekte, die zu den Referenzrasterbildern der ersten Vergleichsebene, die die größte Übereinstimmung mit den gelesenen Zeichen und/oder Objekten haben, gehären, zur Identifizierung des eingelesenen Ist-Zeichens und/oder Ist-Objektes ausgewählt werden,

   und das eingelesene und binär abgebildete Ist-Zeichen und/oder Ist-Objekt mit wenigstens einem Referenzrasterbild wenigstens einer weiteren Vergleichsebene der ausgewählten Soll-Zeichen und/oder Soll-Objekte auf Übereinstimmung verglichen wird, wenn der Vergleich mit dem am meisten übereinstimmenden Referenzrasterbild der ersten Vergleichsebene oder der ersten Vergleichsebene in Kombination mit einer weiteren Vergleichsebene einen unter einem vorgebbaren Schwellwert liegenden Übereinstimmungsgrad ergibt.

2. Verfahren nach Anspruch 1, **dadurch gekennzeichnet,** daß den binären Abbildungen der bekannten Soll-Zeichen und/oder Soll-Objekte sowie der charakteristischen Teile der Zeichen und/oder Objekte Bewertungsflächen mit vorgegebener Pixelzahl sowie Zeichenhöhe, Zeichenbreite, Anzahl der Zeichenpixel, Anzahl der Zeicheneinzelteile, Position der Zeichenunterkante relativ zur Zeilenunterkante, Alternativkennzeichen und Kode der Zeichen oder Objekte zugeordnet werden.

3. Verfahren nach Anspruch 1, **dadurch gekennzeichnet,** daß als Schwellwert zur Identifizierung ein Übereinstimmungsgrad zwischen 55 % und 100 % bzw. eine Abweichung zur Identität zwischen 45 % und 0 % gewählt wird.

4. Verfahren nach Anspruch 3, **dadurch gekennzeichnet,** daß ferner zur Erhöhung der Erkennungssicherheit ein zu überschreitender, minimaler Distanzwert zu einem oder mehreren nächstbesten und/oder zweitbesten Referenzzeichen oder Referenzobjekten vorgesehen ist.

5. Verfahren nach Anspruch 4, **dadurch gekennzeichnet,** daß als Distanzwert ein Wert zwischen 30 % und 100 % der Abweichung gewählt wird.

6. Verfahren nach Anspruch 1 oder 3, **dadurch gekennzeichnet,** daß zur Ermittlung der Übereinstimmungsgrade die Kreuzkorrelationswerte ermittelt werden.

7. Verfahren nach einem der vorhergehenden Ansprüche, **dadurch gekennzeichnet,** daß die in Pixel abgebildeten Soll-Zeichen und/oder Soll-Objekte und die in Pixel abgebildeten gelesenen Ist-Zeichen und/oder Ist-Objekte durch logische Vergleiche pixelweise auf Übereinstimmung geprüft werden und daß die Zahl der Übereinstimmungen oder Abweichungen der verglichenen Pixel gezählt werden.

8. Verfahren nach einem der vorhergehenden Ansprüche, **dadurch gekennzeichnet,** daß der Vergleich mit den Referenzrasterbildern beendet wird, wenn ein vorgebbarer Übereinstimmungsgrad erreicht wird, durch den das betreffende Ist-Zeichen oder Ist-Objekt erkannt ist.

9. Verfahren nach einem der vorhergehenden Ansprüche, **dadurch gekennzeichnet,** daß vor dem Prüfen des Übereinstimmungsgrades die Höhe und Breite des gelesenen, binär abgebildeten Ist-Zeichens oder Ist-Objektes bestimmt wird und mit der Höhe und der Breite der binären Referenzrasterbilder verglichen wird und daß die Prüfung nur mit den Referenzrasterbildern erfolgt, für die das Vergleichsergebnis in einen vorgebbaren Toleranzbereich fällt.

10. Verfahren nach Anspruch 9, **dadurch gekennzeichnet,** daß die kleinste oder größte durch die Breite und Höhe bestimmte Fläche der miteinander verglichenen Ist-Zeichen und Soll-Zeichen die Bewertungsfläche bestimmt.

**11.** Verfahren nach einem der vorhergehenden Ansprüche, **dadurch gekennzeichnet,** daß die gelesenen und binär abgebildeten Zeichen oder Objekte zunächst aus dem Gesamtrasterbild segmentiert werden, indem die Außenkontur jedes einzelnen Zeichens oder Objektes pixelweise abgetastet wird, die Tastergebnisse in eine Tabelle geschrieben werden, deren Zeilenzahl von der Höhe der Zeichen oder Objekte abhängig ist, und die Zeichen oder Objekte entsprechend den Tabellenwerten in einen ein- oder zweidimensionalen Zielbereich für die weitere Bearbeitung zur Zeichenerkennung kopiert werden.

**12.** Verfahren nach Anspruch 11, **dadurch gekennzeichnet,** daß die gelesenen und binär abgebildeten Zeichen oder Objekte nach dem Kopiervorgang entsprechend den Tabellenwerten gelöscht werden.

**13.** Verfahren nach Anspruch 11, **dadurch gekennzeichnet,** daß die Abtastung von einem Außenkonturpixel aus nur in einer Richtung, entweder rechtsdrehend oder linksdrehend, erfolgt.

**14.** Verfahren nach Anspruch 11, **dadurch gekennzeichnet,** daß beim Abtasten des binären Abbildes auf der gesamten Breite der X-Achse eine Berührung mit dem am höchsten aufragenden Zeichen oder Objekt stattfindet, das dann als erstes der Bearbeitung zugeführt wird, wobei nach erfolgter Erkennung die links und/oder rechts von diesem Zeichen oder Objekt befindlichen weiteren Zeichen bearbeitet werden.

## Claims

**1.** A method to recognize characters and/or objects, wherein the characters and objects are read opto-electronically and the read signals are digitized in order to generate a binary single- or two-dimensional image of the character and/or object which will then be compared with binary reference raster images of known desired characters and/or desired objects stored in reference memories, where
the stored binary reference raster images represent a first binary comparison plane,
further binary comparison planes are provided which are formed by stored reference raster images generated by the binary imaging only of characteristic parts of the known characters and/or known objects
the desired characters and/or desired objects belonging to the reference raster images of the first comparison plane coinciding most with the read characters and/or objects are selected to identify the read-in actual character and/or actual object,
and the read-in actual character and/or actual object imaged in binary form is compared for coincidence with a reference raster image of at least one further comparison plane of the selected desired characters and/or desired objects when the comparison with the most coinciding reference raster image of the first comparison plane or of the first comparison plane in combination with a further comparison plane results in a degree of coincidence below a predetermined threshold value.

**2.** Method defined in Claim 1, characterized in that rating surfaces with predetermined pixel numbers and character height, character width, number of character pixels, number of individual parts of the characters, the position of the character underside relative to the line underside, alternative features and codes of the characters or objects are associated with the binary images of the known desired characters and/or desired objects and of the features of parts of the characters and/or objects.

**3.** Method defined in Claim 1, characterized in that a degree of coincidence between 55 and 100 %, ie a deviation from identity between 45 und 0 % is selected as the threshold of identification.

**4.** Method defined in Claim 3, characterized in that in order to increase the realiability of recognition, a minimal distance value to one or more next-best and/or second-best references characters or reference objects is provided.

**5.** Method defined in Claim 4, characterized in that a value between 30 and 100 % of the deviation is selected as the distance value.

**6.** Method defined in either of Claims 1 and 3, characterized in that the cross-correlation values are determined in order to ascertain the degrees of coincidence.

**7.** Method defined in one of the above claims, characterized in that the desired characters and/or the desired objects reproduced in pixels and the read characters and/or the actual objects imaged in pixels are tested pixel-wise by logic comparison for coincidence and in that the logical comparison results are counted.

**8.** Method defined in one of the above claims, characterized in that the comparison with the reference raster images shall be terminated when a predetermined degree of coincidence has been reached whereby the particular actual character or actual object is being recognized.

**9.** Method defined in one of the above claims, characterized in that prior to testing the degree of coincidence, the height and the width of the read actual character or actual object imaged in binary manner will be determined and will be compared with the height and the width of the binary references raster images, and in that the testing will take place only with those references raster images for which the comparison results lies within a predetermined range of tolerances.

**10.** Method defined in Claim 9, characterized in that the least or largest area determined by the height and width of the mutually compared actual characters and desired characters determines the rated surface.

**11.** Method defined in one of the above claims, characterized in that the read characters or objects imaged in binary form first are segmented from the total raster image by scanning pixel-wise the outer contour of each character or object, in that the scanning results are entered into a table of which the number of lines depends on the height of the characters or objects, and in that the characters or objects are copied according to the tabulated values into a one-dimensional or two-dimensional target zone for the further processing of character recognition.

**12.** Method defined in Claim 11, characterized in that the read characters or objects imaged in binary form are erased according to the tabulated values following copying.

**13.** Method defined in Claim 11, characterized in that the scanning of an outer contour pixel takes place only in one direction either right-rotary or left-rotary.

**14.** Method defined in Claim 11, characterized in that during the scanning of the binary imaging over the entire width of the x-axis, contact takes place with the highest projecting character or object which is then added as the fist one to the processing, and that after recognition has taken place the further characters left and/or right of this character or object will be processed.

**Revendications**

**1.** Procédé de reconnaissance de signes et/ou d'objets, dans lequel les signes et objets sont lus opto-électroniquement et les signaux de lecture sont numérisés pour former une représentation mono ou bidimensionnelle des signes et/ou objets qui est comparée à des images-écrans de référence binaires, mémorisés dans des mémoires de référence, de signes de consigne et/ou d'objets de consigne,
les images-écrans de référence binaires mémorisés représentant un premier plan de comparaison binaire,
d'autres plans de comparaison binaires étant prévus, qui sont formés par des images-écrans de référence mémorisés qui sont formés par représentation binaire seulement de parties caractéristiques des signes connus et/ou objets connus,
des signes de consigne et/ou objets de consigne qui appartiennent au premier plan de comparaison, qui ont la plus grande concordance avec les signes et/ou objets lus, étant sélectionnés pour l'identification du signe effectif et/ou objet effectif mis en mémoire,
et le signe effectif et/ou objet effectif mis en mémoire et représenté binairement étant comparé en ce qui concerne la concordance à au moins un image-écran de référence d'au moins un autre plan de comparaison de signal de consigne et/ou objets de consigne sélectionné, lorsque la comparaison de l'image-écran de référence le plus concordant du premier plan de comparaison ou du premier plan de comparaison en combinaison avec un autre plan de comparaison donne un taux de concordance se trouvant au-dessous d'une valeur de seuil prédéfinissable.

7

**2.** Procédé selon la revendication 1,
caractérisé en ce que des surfaces de pondération avec un nombre de pixels prédéterminé ainsi que hauteur du signe, largeur du signe, nombre de pixels du signe, nombre des parties individuelles du signe, position de l'arête inférieure du signe relativement à l'arête inférieure de ligne, signe caractéristique alternatif et code des signes ou objets sont adjoints aux représentations binaires des signes de consigne et/ou objets de consigne connus ainsi qu'aux parties caractéristiques des signes et/ou objets.

**3.** Procédé selon la revendication 1,
caractérisé en ce qu'on choisit comme valeur de seuil pour l'identification d'un taux de concordance entre 55% et 100% une divergence entre 45% et 0% par rapport à l'identité.

**4.** Procédé selon la revendication 3,
caractérisé en ce qu en outre, pour augmenter la sécurité d'identification, on prévoit une valeur d'écartement minimale à dépasser a un ou plusieurs signes de référence ou objets de référence immédiatement meilleurs et/ou meilleurs en second.

**5.** Procédé selon la revendication 4,
caractérisé en ce qu'on choisit comme valeur d'écartement une valeur entre 30% et 100% de la divergence.

**6.** Procédé selon la revendication 1 ou 3,
caractérisé en ce qu'on détermine les valeurs de corrélation croisée pour la détermination du taux de concordance.

**7.** Procédé selon l'une des revendications précédentes,
caractérisé en ce que les signes de consigne et/ou objets de consigne représentés en pixels et les signes effectifs et/ou objets effectifs représentés en pixels sont examinés pour la concordance sur les pixels par des comparaisons logiques et qu'on compte le nombre de concordances ou de divergences des pixels comparés.

**8.** Procédé selon l'une des revendications précédentes,
caractérisé en ce que la comparaison avec les images-écrans de référence est achevée lorsqu'un taux de concordance prédéterminable, par lequel le signe effectif ou objet effectif concerné est reconnu, est atteint.

**9.** Procédé selon l'une des revendications précédentes,
caractérisé en ce que, avant l'examen du taux de concordance, on détermine la hauteur et la largeur du signe effectif ou objet effectif lu représenté binairement et on les compare à la hauteur et à la largeur de l'image-écran de référence binaire et que l'examen n'est effectué qu'avec les imagesécrans de référence pour lesquels le résultat de comparaison tombe dans une plage de tolérance prédéterminable.

**10.** Procédé selon la revendication 9,
caractérisé en ce que la plus petite ou plus grande surface déterminée par la largeur et la hauteur des signes effectifs et signes de consigne comparés l'un à l'autre détermine la surface d'évaluation.

**11.** Procédé selon l'une des revendications précédentes,
caractérisé en ce que les signes ou objets lus et représentés binairement sont d'abord segmentés à partir de l'image-écran d'ensemble, en ce que le contour extérieur de chaque signe ou objet individuel est exploré en pixels, les résultats d'exploration sont inscrits dans un tableau dont le nombre de lignes dépend de la hauteur des signes ou objets et les signes ou objets sont copiés en correspondance aux valeurs du tableau dans une zone de but mono ou bidimensionnelle pour le traitement continué pour la reconnaissance des signes.

**12.** Procédé selon la revendication 11,
caractérisé en ce que les signes ou objets lus et représentés binairement sont effacés après l'opération de copie en correspondance aux valeurs du tableau.

**13.** Procédé selon la revendication 11,
caractérisé en ce que l'exploration d'un pixel de contour extérieur n'est effectué qu'à partir d'une direction soit tournant à droite soit tournant à gauche.

**14.** Procédé selon la revendication 11,
caractérisé en ce que, lors de l'exploration de la représentation binaire sur toute la largeur de l'axe des X, a lieu un contact avec le signe ou objet saillant le plus haut qui est ensuite amené en tant que premier au traitement, les autres signes se trouvant à gauche et/ou à droite de ce signe ou objet étant traités après reconnaissance effectuée.

5

30

Vergleichs(Bit)-Ebene

1.      2.

Vergleichs(Bit)-Ebene

1.      2.

Soll-t         Soll-f         Ist-t

Fig. 1

G u s t a v ← M → e i e r

Fig. 3

I   Abtasten

II  In Tabelle schreiben

X  1  2  3  4  5  6

Y
1
2
3
4
5
6
7
8
9
10

b

a

| Links-Wert | Rechts-Wert |
|---|---|
| 1 | 2 |
| 1 | 2 |
| 1 | 2 |
| 1 | 2 |
| 1 | 2 |
| 1 | 2 |
| 1 | 3 |
| 1 | 2 |
| 1 | 6 |
| 1 | 6 |

III  Kopieren in Zielbereich

IV   Löschen

Fig. 2